# EUROPEAN PATENT APPLICATION

(11) **EP 1 674 145 A2**
(43) Date of publication of application: **28.06.2006**
(21) Application number: 05258011.5
(22) Date of filing: 22.12.2005
(51) Int. Cl.: B01D 39/16, B01D 39/18

(54) **Filter elements**

(30) Priority: 22.12.2004 JP 2004371139
(71) Applicant: Toyota Boshoku Kabushiki Kaisha, Kariya-shi, Aichi-ken (JP); AWA PAPER MFG. Co., Ltd., Tokushima-shi, Tokushima-ken (JP)
(72) Inventor: Maeda, Kunitaka c/o Toyota Boshoku K.K., Kariya-shi Aichi-ken (JP); Sanami, Yoshihisa c/o Toyota Boshoku K.K., Kariya-shi Aichi-ken (JP); Kume, Koji c/o Toyota Boshoku K.K., Kariya-shi Aichi-ken (JP); Kagawa, Joji c/o Awa Paper MFG. Co., Ltd., Tokushima-shi Tokushima-ken (JP); Jo, Takeo c/o Awa Paper MFG. Co., Ltd., Tokushima-shi Tokushima-ken (JP)
(74) Representative: Pratt, David Martin

(57) **Abstract**

A filter element (10) has an upstream-side filter layer (12) and a downstream-side filter layer (14). The downstream-side filter layer (14) is attached to the upstream-side filter layer (12). A non-woven fabric made of resin fibers (F) formed by a spinning process constitutes the upstream-side filter layer (12). The resin fibers (F) have an average diameter within a range of 2.5 µm and 10 µm. The non-woven fabric has a weight per unit area within a range of approximately 2.5 g/m² to 15 g/m². The downstream-side filter layer (14) has a finer mesh than the mesh of the upstream-side filter layer (12).

## Description

This application claims priority to Japanese patent application serial number 2004-371139, the contents of which are incorporated herein by reference.

The present invention relates to filtering elements for filters and in particular to filter elements that are used for removing dust and contaminates in the air and have an upstream-side layer made of non-woven fabric and a downstream-side layer made of a suitable filtration material.

Japanese Laid-Open Patent Publication No. 2001-523562, corresponding to International Publication WO99/26719, teaches a known filter element. As shown in FIG. 5, a filter element 90 of this publication has an upstream-side, non-woven fabric layer 92, and a downstream-side, filter paper layer 94. In this filter element 90, the filtration ability is configured such that the filtration ability increases in a direction toward the downstream-side. Thus, the upstream-side non-fabric layer 92 is more coarse than the downstream-side filter paper layer 94. Therefore, the non-fabric layer 92 can hold dust particles having a relatively large diameter, while the paper filter layer 94 can hold dust particles having a relatively small diameter. In the example of this publication, the weight per unit area of the non-fabric layer 92 is determined to be within a range between 15g/m² and 150g/m². The weight per unit area of the filter paper layer 94 is determined to be within a range between 50g/m² and 200g/m².

In this publication, the nature of the upstream-side non-woven fabric 92 and the downstream-side paper filter layer 94 are identified only by the weight per unit area. No other property, such as the diameter of the fibers, is identified. Assuming that the weight per unit area is fixed, the mesh of the non-woven fabric layer 92 may become coarser (i.e., more open) as the diameter of the fibers increases. On the contrary, the mesh of the non-woven fabric layer 92 may become finer (i.e., more constricted) as the diameter of the fibers decreases. Therefore, it is not possible to determine the mesh size of the non-woven fabric 92 based only on the weight per unit area.

If the mesh of the upstream-side non-woven fabric layer 92 is too fine, the non-woven fabric layer 92 may become easily clogged. When the non-woven fabric layer 92 has been clogged, it is not possible to use the filtration ability of the downstream-side paper filter layer 94. As a result, the available dust-holding amount of the filter element 90 may be reduced. On the contrary, if the mesh of the upstream-side non-woven fabric layer 92 is too coarse, a higher percentage of the dust particles may pass through the non-woven fabric layer 92. This may result in a higher percentage of dust particles being held by the paper filter layer 94, causing an increased burden on the paper filter layer 94. Consequently, this may cause the potential clogging of the paper filter layer 94. Additionally, the available dust holding amount of the filter element 90 may also be decreased.

It is accordingly an object of the present invention to teach improved techniques for increasing the total available dust-holding amount of a filter element while appropriately determining the mesh of the upstream-side filter layer.

According to one aspect of the present teachings, filter elements are taught for holding dust in the air. A filter element may have an upstream-side filter layer and a downstream-side filter layer. The downstream-side filter layer is attached to the upstream-side filter layer. A non-woven fabric made of resin fibers formed by a spinning process constitutes the upstream-side filter layer. The resin fibers may have an average diameter within a range of 2.5 µm and 10 µm. The non-woven fabric may have a weight per unit area within a range of approximately 2.5 g/m² to 15 g/m². The downstream-side filter layer mesh is finer than the upstream-side filter layer mesh.

With this arrangement, the mesh size of the non-woven fabric constituting the upstream-side filter layer may be established based on a set value of the fiber diameter and a set value of the weight per unit area. In addition, with the setting of the fiber diameter to be within a range of between 2.5 µm and 10 µm and the setting of the weight per unit area to be within a range of between 2.5 g/m² and 15 g/m², it is possible to suitably configure the mesh size of the non-woven fabric in relation to the downstream-side filter layer (which has a finer mesh than the upstream-side filter layer). Therefore, the dust particles may be held by the filter element with the dust holding amount balanced between the upstream-side filter layer and the downstream-side filter layer. As a result, the total available dust holding amount may be increased.

In one embodiment, a total of the surface area of the resin fibers per unit area of the non-woven fabric is set to be within a range of approximately 1 m²/m² to 3 m²/m².

In general, the dust in the air is held at the surfaces of the resin fibers. Therefore, the available dust holding amount may theoretically increase as the total of surface area of the resin fibers (hereinafter also called the "total fiber surface area") increases. In order to increase the total fiber surface area while the weight per unit area is fixed, the diameters of the fibers may be reduced and the number of fibers may be increased. However, reducing the diameters and increasing the number of fibers may make the mesh of the non-woven fabric too fine and cause the potential clogging of dust on the surface of the non-woven fabric. When clogging occurs, the interior structure of the non-woven fabric may not perform a filtration function. As a result, the available dust holding amount may be decreased.

With the total fiber surface area set within a range of approximately 1 m²/m² to 3 m²/m² as noted above, the potential clogging of the non-woven fabric may be decreased, so that the total available dust holding amount may be increased.

In another embodiment, the downstream-side filter layer has filtration pores with an average diameter of 20 µm to 90 µm. With this setting, the dust can be held by the filter element with the holding amount balanced between the upstream-side filter layer and the downstream-side filter layer. As a result, the total of the dust holding amount of the upstream-side filter layer 12 and the dust holding amount of the downstream-side filter layer 14 can be increased. For example, the downstream-side filter layer may be constituted by a filter paper.

In order to further improve the available dust holding amount, the total fiber surface area of the non-woven fabric may be set to be within a range of between 1.4 m²/m² and 2.9 m²/m² and preferably to be 1.7 m²/m². The fiber diameter is set to be within a range of 3 µm and 10 µm and preferably to be 10 µm. In addition, the weight per unit area is set to be within 2.5 g/m² and 6 g/m², and preferably to be 6 g/m².

Additional objects, features, and advantages, of the present invention will be readily understood after reading the following detailed description together with the claims and the accompanying drawings, in which:
FIG. 1 is a vertical cross-sectional view of a part of a filter element according to an embodiment of the present invention; and
FIG. 2 is a schematic, side elevation view of an apparatus for manufacturing the upstream-side filter layer; and
FIG. 3(A) is a graph showing the relationship between a total of the surface areas of the fibers of a non-woven fabric of the upstream-side filter layer and the dust-holding amount; and
FIG. 3(B) is a graph showing the relationship between the diameters of the fibers of the non-woven fabric and the total fiber surface area; and
FIG. 4(A) is a table showing samples of non-woven fabrics; and
FIG. 4(B) is a graph showing the correlation between the total surface area of the non-woven fabric and the dust holding amount; and

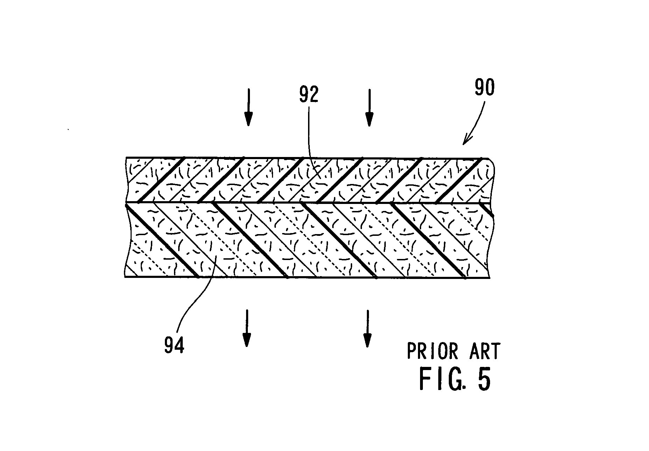

FIG. 5 is a vertical sectional view of a part of a known filter element.

Each of the additional features and teachings disclosed above and below may be utilized separately or in conjunction with other features and teachings to provide improved filter elements and methods and apparatus for producing filter elements. Representative examples of the present invention, which examples utilize many of these additional features and teachings both separately and in conjunction with one another, will now be described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the following detailed description may not be necessary to practice the invention in the broadest sense, and are instead taught merely to particularly describe representative examples of the invention. Moreover, various features of the representative examples and the dependent claims may be combined in ways that are not specifically enumerated in order to provide additional useful embodiments of the present teachings.

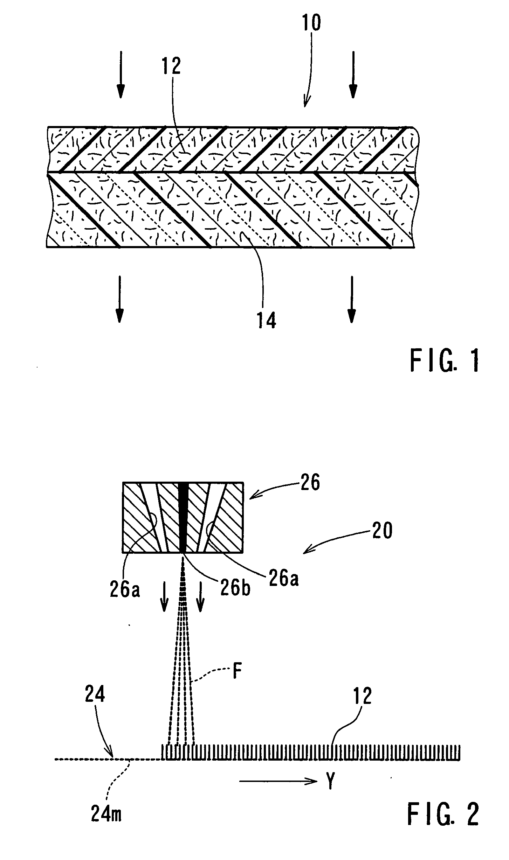

A representative embodiment of the present invention will now be described with reference to FIGS. 1 to 4. Referring to FIG. 1, a representative filter element 10 is designed for use with an air filter and has an upstream-side filter layer 12 and a downstream-side filter layer 14. The upstream-side filter layer 12 is made of non-woven fabric and is adapted to hold dust and other contaminants in the air that have relatively large diameters. For this purpose, the mesh of the upstream-side filter layer 12 is set to be coarser (i.e., more open) than the mesh of the downstream-side filter layer 14. The downstream-side filter layer 14 is adapted to hold dust and other contaminants that have passed through the upstream-side filter layer 12. The mesh of the downstream-side filter layer 14 is set to be finer than the mesh of the upstream-side filter layer 12.

The non-woven fabric of the upstream side filter layer 12 may be formed by thermoplastic resin fibers produced by a melt-blown process that will be explained later. The non-woven fabric constituting the upstream-side filter layer 12 and the filter paper constituting the downstream-side filter layer 14 are joined together by an appropriate process, such as an embossing process and a lamination process. For example, the embossing process may be performed by clamping the non-woven fabric and the filter paper between upper and lower members, one of which has small projections that are heated for partly fusing the non-woven fabric. Thus, as the small projections stick into the non-woven fabric, the non-woven fabric may be bonded to the filter paper at the fused portions of the non-woven fabric. A laminating process may be performed by placing an air-permeable hot melt sheet between the non-woven fabric and the filter paper. By heating and pressing the non-woven fabric together with the filter paper, the non-woven fabric and the filter paper may be bonded together by the hot melt sheet.

A manufacturing apparatus 20, for manufacturing the non-woven fabric of the upstream-side filter layer 12, is schematically shown by a side elevation view in FIG. 2. The manufacturing apparatus 20 includes a conveyor 24 that extends along a Y-direction. A beltlike base fabric 24m is laid horizontally on the conveyor 24. Preferably, the base fabric 24m may be made of a meshed air-permeable fabric and is adapted to receive fibers F in a semi-melted or a semi-solid state. The fibers F are sprayed from a spinning nozzle 26. Therefore, the fibers F may fall onto the base fabric 24m to be laid thereon to a predetermined thickness as the conveyer 24 moves in the Y-direction.

The spinning nozzle 26 is positioned at a predetermined level above the base fabric 24m and is oriented downward. The spinning nozzle 26 is designed to produce the fibers F by a melt-blown process. More specifically, hot air may be blown out of the hot-air discharge holes 26a of the spinning nozzle 26, against the melted resin that is ejected as the resin fibers F from a central resin ejection hole 26b of the spinning nozzle 26. The resin fibers F are blown by the hot air and may fall onto the base fabric 24m while the resin fibers F are still in a semi-melted state. Each of the resin fibers F may contact with other resin fibers F and may be bonded thereto at the contact points. As a result, the bonded resin fibers F may form a non-woven fabric.

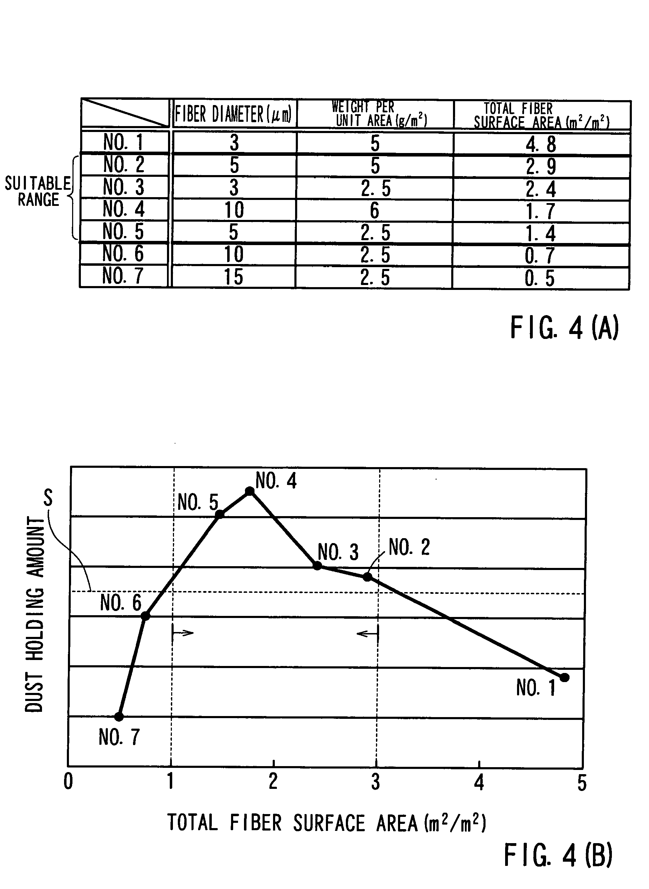

The diameter of the resin fibers F constituting the upstream-side filter layer 12 may be determined as desired by adjusting the flow rate of the resin from the resin ejection hole 26b, and/or by adjusting the flow rate of the hot air blown out of the hot-air discharge holes 26a. In this representative embodiment, the diameter (i.e., average diameter) of the resin fibers F is set to be within a range of between 2.5 µm and 15 µm, and preferably between 2.5 µm and 10 µm (see FIG. 4(A)).

The weight per unit area of the non-woven fabric of the upstream-side filter layer 12 may also be determined as desired by adjusting the transferring speed of the conveyor 24. Thus, as the speed of the conveyor 24 decreases, the amount of fibers F laid on the base fabric 24m may increase, resulting in the increase of the weight per unit area of the non-woven fabric. On the contrary, as the speed of the conveyor 24 increases, the amount of fibers F laid on the base fabric 24m may decrease, resulting in the decrease of the weight per unit area of the non-woven fabric. In this representative embodiment, the weight per unit area of the non-woven fabric of the upstream-side filter layer 12 is set to be within a range of between 2.5 g/m² and 15 g/m ² and preferably between 2.5 g/m² and 6 g/m² (see FIG. 4(A)).

In addition, in the representative embodiment, the total of the surface area of the fibers F per unit area of the non-woven fabric of the upstream-side filter layer 12 of the filter element 10 is set to be within a range of between 1 m²/m² and 3 m²/m², and preferably between 1.4 m²/m² and 2.9 m²/m² (see FIG. 4(A)) based on the above setting of the weight per unit area and the diameter of the resin fibers F of the non-woven fabric of the upstream-side filter layer 12.

In general, the diameters of the dust particles contained in the air are primarily within a range of between 0.1 µm and 100 µm. Therefore, among the dust particles contained in the air, the non-woven fabric of the upstream-side layer 12 may hold those having relatively larger diameters. Because the dust particles may be held at the surfaces of the fibers F of the non-woven fabric, the available dust holding amount may increase as the total increases of the surface area of the fibers F per unit area of the non-woven fabric. Decreasing the diameter of the fibers F and increasing the number of the fibers F may increase the total of the surface area of the fibers F. However, if the diameter of the fibers F is too small while the number of the fibers F is increased, the mesh of the non-woven fabric may become too fine and cause the potential clogging of the dust. When clogging occurs, the interior structure of the non-woven fabric may not perform a filtration function. Therefore, the available dust holding amount may be reduced.

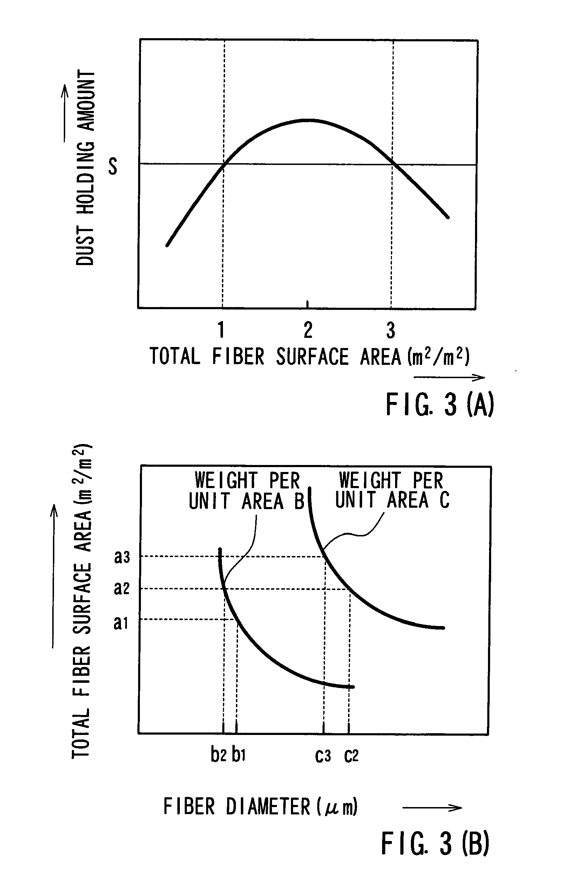

The relationship between the total of the surface area of the fibers F and the amount of dust held by the filter element 10 is shown by the graph in FIG. 3(A). Here the "S" line indicates a reference level dust-holding amount. As will be seen from FIG. 3(A), the dust-holding amount becomes greater than the reference amount S as the total of the surface area of the fibers F is within a range of between 1 m²/m² and 3 m²/m². When the total of the surface area of the fibers F exceeds the upper limit value of 3 m²/m², the mesh of the non-woven fabric of the upstream-side filter layer 12 becomes too fine and causes potential clogging of the dust as described above. When clogging occurs, the interior structure of the non-woven fabric may not perform a filtration function. Therefore, the available dust holding amount may be reduced. On the contrary, when the total of the surface area of the fibers F is lowered from the lower limit value of 1 m²/m², the mesh of the non-woven fabric of the upstream-side filter layer 12 becomes too coarse and consequently reduces the dust holding ability of the upstream-side filter layer 12. As a result, the available dust holding amount may also be reduced.

The relationship between the total of the surface area of the fibers F and the diameters (i.e., the average diameter) of the fibers F of the non-woven fabric of the upstream-side filter layer 12 is shown by the graph in FIG. 3(B). The necessary weight per unit area of the non-woven fabric and the necessary diameters of the fibers F for a desired total surface area of the fibers F can be determined from the graph in FIG. 3(B).

For example, assuming the weight per unit area is Bg/m², the diameter of the fibers may be set to be b2 µm in order to obtain a target total surface area of the fibers of a2 m²/m². Similarly, assuming the weight per unit area is C g/m², the diameter of the fibers may be set to be c2 µm in order to obtain the target total surface area of a2 m²/m². Here, the weight per unit area Bg/m² is smaller than Cg/m² (B < C) and the fiber diameter b2 µm is smaller than c2 µm (b2 < c2). In this way, a fixed total surface area can be maintained by incrementally increasing the fiber diameter as the weight per unit area is increased.

On the other hand, assuming the weight per unit area is Bg/m², the diameter of the fibers may be set to be b1 µm in order to obtain a target total surface area of the fibers of a1 m²/m² (a1 < a2). Here, the fiber diameter b2 µm is smaller than b1 µm (b2<b1). Similarly, assuming the weight per unit area is C g/m², the diameter of the fibers may be set to be c3 µm in order to obtain the target total surface area of a3 m²/m² (a3 > a2). Here, the fiber diameter c3 µm is smaller than c2 µm (c3 < c2). In this way, if the weight per unit area is fixed, the total surface area of the fibers decreases as the diameter of the fibers increases, while the total surface area increases as the fiber diameter decreases.

In this representative embodiment, the filter paper, constituting the downstream-side filter layer 14 attached to the non-woven fabric constituting the upstream-side filter layer 12, has filtration pores with an average diameter of 25 µm to 35 µm. The mesh of the filter paper is finer than the mesh of the non-woven fabric so that the relatively small diameter dust particles that have passed through the non-woven fabric may be held by the filter paper.

The dust-holding amount of the filter element 10 is shown by a graph in FIG. 4(B) in relation to various samples in which non-woven fabrics (as the upstream-side layer 12) having different total fiber areas as shown in FIG. 4(A) are respectively attached to a filter paper (as the downstream-side layer 14) having filtration pores with an average diameter of 25 µm to 35 µm (hereinafter called "reference filter paper").

Sample No. 1 has reference filter paper as the downstream-side layer 14 and No. 1 non-woven fabric as the upstream-side layer 12. No. 1 non-woven fabric has a total fiber surface area of 4.8 m²/m², a fiber diameter of 3 µm, and a weight per unit area of 5 g/m². The point to which "No. 1" is affixed in FIG. 4(B) indicates the dust holding amount of Sample No. 1.

Sample No. 2 has reference filter paper as the downstream-side layer 14 and No. 2 non-woven fabric as the upstream-side layer 12. No. 2 non-woven fabric has a total fiber surface area of 2.9 m²/m², a fiber diameter of 5 µm, and a weight per unit area of 5 g/m². The point to which "No. 2" is affixed in FIG. 4(B) indicates the dust holding amount of Sample No. 2.

Sample No. 3 has reference filter paper as the downstream-side layer 14 and No. 3 non-woven fabric as the upstream-side layer 12. No. 3 non-woven fabric has a total fiber surface area of 2.4 m²/m², a fiber diameter of 3 µm, and a weight per unit area of 2.5 g/m². The point to which "No. 3" is affixed in FIG. 4(B) indicates the dust holding amount of Sample No. 3.

Sample No. 4 has reference filter paper as the downstream-side layer 14 and No. 4 non-woven fabric as the upstream-side layer 12. No. 4 non-woven fabric has a total fiber surface area of 1.7 m²/m², a fiber diameter of 10 µm, and a weight per unit area of 6 g/m². The point to which "No. 4" is affixed in FIG. 4(B) indicates the dust holding amount of Sample No. 4.

Sample No. 5 has reference filter paper as the downstream-side layer 14 and No. 5 non-woven fabric as the upstream-side layer 12. No. 5 non-woven fabric has a total fiber surface area of 1.4 m²/m², a fiber diameter of 5 µm, and a weight per unit area of 2.5 g/m². The point to which "No. 5" is affixed in FIG. 4(B) indicates the dust holding amount of Sample No. 5.

Sample No. 6 has reference filter paper as the downstream-side layer 14 and No. 6 non-woven fabric as the upstream-side layer 12. No. 6 non-woven fabric has a total fiber surface area of 0.7 m²/m², a fiber diameter of 10 µm, and a weight per unit area of 2.5 g/m². The point to which "No. 6" is affixed in FIG. 4(B) indicates the dust holding amount of Sample No. 6.

Sample No. 7 has reference filter paper as the downstream-side layer 14 and No. 7 non-woven fabric as the upstream-side layer 12. No. 7 non-woven fabric has a total fiber surface area of 0.5 m²/m², a fiber diameter of 15 µm, and a weight per unit area of 2.5 g/m². The point to which "No. 7" is affixed in FIG. 4(B) indicates the dust holding amount of Sample No. 7.

As will be seen from the graph in FIG. 4(B), the dust holding amount of Sample Nos. 2, 3, 4, and 5, respectively having Nos. 2, 3, 4, and 5 non-woven fabrics as the upstream-side layer 12, exceeds the reference amount S. This means that the dust holding amount may exceed the reference amount S if (1) the total fiber surface area of the non-woven fabric is set to be within a range of between 1.4 m²/m² and 2.9 m²/m², (2) the fiber diameter is set to be within a range of 3 µm and 10 µm, and (3) the weight per unit area is set to be within 2.5 g/m² and 6 g/m². In particular, if the total fiber surface area is set to be 1.7 m²/m² (where the fiber diameter is 10 µm and the weight per unit area is 6 g/m²) as indicated by the point "No. 4", the dust holding amount may be maximized.

In the case of the Sample No. 1 filter having the No. 1 non-woven fabric as the upstream-side filter layer 12, the No. 1 non-woven fabric has a total fiber surface area of 4.8 m²/m² (where the fiber diameter is 3 µm and the weight per unit area is 5 g/m²) that is greater than the upper limit value of 3 m²/m² described with reference to FIG. 3(A). When the total fabric surface area exceeds an upper limit value of 3 m²/m², the non-woven fabric may potentially have the tendency to become clogged with dust. With the upstream-side filter layer 14 thus clogged, the filter paper constituting the downstream-side filter layer 12 may not perform a filtration function. Presumably, this may be the reason why the total dust holding amount is decreased.

In the cases of Sample Nos. 6 and 7 filters respectively having No. 6 non-woven fabric and No. 7 non-woven fabric, the Nos. 6 and 7 non-woven fabrics respectively have a total fiber surface area of 0.7 m²/m² (where the fiber diameter is 10 µm and the weight per unit area is 2.5 g/m²) and 0.5 m²/m² (where the fiber diameter is 15 µm and the weight per unit area is 2.5 g/m²). These total fiber surface areas are smaller than a lower limit value of 1 m²/m² described with reference to FIG. 3(A). Presumably, when the total fabric surface area is smaller than the lower limit value of 1 m²/m², the mesh of the non-woven fabric may become too coarse so that dust particles may easily pass through the non-woven fabric. As a result, the burden on the reference paper filter may increase, resulting in a decrease in the total dust holding amount.

It may be possible to obtain a dust holding amount greater than the reference value S, if (1) the total fiber surface area of the non-woven fabric is set to be within a range of between a lower limit value of 1 m²/m² and an upper limit value of 3 m²/m², (2) the fiber diameter is set to be within a range of 2.5 µm and 15 µm, and (3) the weight per unit area is set to be within 2.5 g/m² and 15 g/m².

As described above, according to the representative filter element 10, the mesh size of the non-woven fabric layer constituting the upstream-side filter layer 12 may be established based on the total surface area of the fibers, the fiber diameter, and the weight per unit area. In addition, with the non-woven fabric determined such that (1) the total fiber surface area of the non-woven fabric is set to be within a range of between a lower limit value of 1 m²/m² and an upper limit value of 3 m²/m², (2) the fiber diameter is set to be within a range of 2.5 µm and 15 µm, and (3) the weight per unit area is set to be within 2.5 g/m² and 15 g/m², it is possible to suitably set the mesh size of the non-woven fabric in relation to the filter paper that is disposed on the downstream side of the non-woven fabric. Therefore, dust particles may be held by the filter element with the dust holding amount balanced between the upstream-side non-woven fabric and the downstream-side paper filter. As a result, the total available dust holding amount may be increased.

In particular, with the determination of the total fiber surface area of the non-woven fabric within a range of between a lower limit value of 1 m²/m² and an upper limit value of 3 m²/m², it is possible to inhibit the potential clogging of dust within the non-woven fabric layer constituting the upstream-side filter layer 12. Therefore, the dust holding amount available from the upstream-side filter layer 12 can be increased. In addition, with the determination of the diameter of the filtration pores of the filter paper constituting the downstream-side filter layer 14 within a range of between 25 µm and 35 µm, the dust can be held with the holding amount balanced between the upstream-side filter layer 12 and the downstream-side filter layer 14. As a result, the total of the dust holding amount of the upstream-side filter layer 12 and the dust holding amount of the downstream-side filter layer 14 can be increased.

Although the upstream-side filter layer 12 and the downstream-side filter layer 14 of the filter element 10 of the above representative embodiment are bonded together by an embossing process or a laminating process, any other type of bonding techniques can be used. For example, the upstream-side filter layer 12 may be directly bonded to the downstream-side filter layer 14 by having the downstream-side filter layer 14 directly receive the fibers F from the spinning nozzle 26. This results in the non-woven fabric being directly formed on the downstream-side filter layer 14.

In addition, although filter paper is used as the downstream-side filter layer 14 in the above representative embodiment, filter paper may be replaced with a non-woven fabric having a fine mesh, e.g., with filtration pores having an average diameter of 20 µm to 90 µm.

## Claims

1. A filter element (10) for removing dust and contaminants from the air, comprising:
an upstream-side filter layer (12); and
a downstream-side filter layer (14) attached to the upstream-side filter layer (12),
wherein the upstream-side filter layer (12) comprises a non-woven fabric made of resin fibers (F) formed by a spinning process,
wherein the resin fibers (F) have an average diameter within a range of between 2.5 µm and 10 µm ,
wherein the non-woven fabric has a weight per unit area within a range of approximately 2.5 g/m² to 15 g/m²; and
wherein a downstream-side filter layer mesh is finer than an upstream-side filter layer mesh.

2. The filter element (10) as in claim 1,
wherein a total of surface area of the resin fibers (F) per unit area of the non-woven fabric is set to be within a range of approximately 1 m²/m² to 3 m²/m².

3. The filter element (10) as in claim 1 or 2,
wherein the downstream-side filter layer (14) has filtration pores with an average diameter in a range of 20 µm to 90 µm.

4. The filter element (10) as in claim 3,
wherein the downstream-side filter layer (14) has filtration pores with an average diameter in a range of 25 µm to 35 µm.

5. The filter element (10) as in any one of the preceding claims,
wherein the downstream-side filter layer (14) comprises a paper filter.

6. The filter element (10) as in any one of claims 1 to 4,
wherein the downstream-side filter layer (14) comprises a second non-woven fabric made of a second set of resin fibers.

7. The filter element (10) as in any one of the preceding claims,
wherein the total fiber surface area of the non-woven fabric is set to be in a range of 1.4 m²/m² to 2.9 m²/m²,
wherein the fiber diameter is set to be within a range of 3 µm to 10 µm, and
wherein the weight per unit area is set to be within a range of 2.5 g/m² to 6 g/m².

8. The filter element (10) as in claim 7,
wherein the total fiber surface area is set to be 1.7 m²/m²,
wherein the fiber diameter is set to be 10 µm, and
wherein the weight per unit area is set to be 6 g/m².

9. The filter element (10) as in any one of the preceding claims, further comprising:
an air-permeable hot melt sheet,
wherein the air-permeable hot melt sheet is used to attach the downstream-side filter layer (14) to the upstream-side filter layer (12) via a lamination process.

10. The filter element (10) as in any one of claims 1 to 8, wherein the downstream-side filter layer (14) is attached to the upstream-side filter layer (12) via an embossing process.

11. The filter element (10) as in any one of claims 1 to 8, wherein the downstream-side filter layer (14) is attached to the upstream-side filter layer (12) via a formation of the upstream-side filter layer (12) directly onto the downstream-side filter layer (14).
